# NOUVEAU FASCICULE DE BREVET EUROPEEN

(11) **EP 0 607 330 B2**
(45) Date de publication et mention de la décision concernant l'opposition: **09.05.2001**
(45) Mention de la délivrance du brevet: 23.04.1997
(21) Numéro de dépôt: 92922237.0
(22) Date de dépôt: 08.10.1992
(51) Int. Cl.: C04B 26/18, C08K 3/36, C08J 5/24

(54) **MATIERE A MOULER A EFFET DECORATIF**
FORMMASSE MIT EFFEKTDEKOR
DECORATIVE MOULDING MATERIAL

(30) Priorité: 08.10.1991 FR 9112362
(43) Date de publication de la demande: 27.07.1994
(73) Titulaire: MENZOLIT, F-41343 Vineuil Cedex (FR)
(72) Inventeur: OLLIVE, Claude, 41250 MONT PRES CHAMBORD (FR)
(74) Mandataire: Casalonga, Axel
(86) Numéro de dépôt international: FR9200934
(87) Numéro de publication internationale: WO9307102

(56) Documents cités:
- WO-A-88/02354
- WO-A-91/01353
- DE-A- 2 705 905
- FR-A- 2 139 389
- GB-A- 2 237 578
- JP-A- 2 199 050
- DATABASE WPIL Week 7539, Derwent Publications Ltd., London, GB; AN 75-64495W & JP-A-49124165

## Description

La présente invention concerne de nouvelles matières à mouler à effet décoratif à base d'une résine thermodurcissable, de charges et de fibres de renforcement et leur application dans la fabrication de pièces moulées présentant un aspect décoratif en particulier d'objets destinés aux équipements sanitaires et de cuisine.

L'application des compositions à base de résine thermodurcissable, de charges et de renfort est très largement utilisée dans l'industrie automobile, de l'électrotechnique et de l'électroménager et dans l'industrie du mobilier.

Une application particulièrement intéressante de ces compositions s'est développée ces dernières années dans le secteur des équipements sanitaires et de cuisine. On cherche en particulier, à obtenir dans ce domaine, des articles moulés présentant un aspect en masse décoratif proche de celui des pierres naturelles telles que les marbres et les granits dans des gammes de coloris et de motifs les plus larges.

Les articles moulés conçus dans le domaine des équipements sanitaires et de cuisine doivent présenter en outre une bonne inertie chimique (résistance aux produits chimiques, aux produits alimentaires et aux intempéries), une forte résistance à l'abrasion et une bonne résistance à la rayure.

Les matières à mouler à effet décoratif, utilisées selon l'état de la technique, sont généralement préparées sous forme de mats préimprégnés (SMC) ou de premix (BMC). Pour obtenir l'effet décoratif et répondre aux caractéristiques physiques définies ci-dessus, les semi-produits SMC ou BMC sont généralement recouverts en surface par des couches de revêtement spécifiques à l'usage envisagé soit avant le moulage (pre-in-mold-coating, PIMC), soit pendant le moulage (in-mold-coating, IMC), soit après moulage (revêtement de peintures).

Ces techniques présentent l'inconvénient de prolonger les temps de cycle de moulage et d'augmenter le coût de production. De plus, il est difficile d'obtenir des produits en masse parfaitement homogènes. Ces méthodes de fabrication ne permettent pas d'obtenir des effets décoratifs homogènes en masse.

D'autre part, on cherche à obtenir des produits très résistants à l'abrasion et à la rayure à partir de matières à mouler préparées sous forme de BMC contenant des charges dures.

Le document JP-A-017327 décrit des compositions de matières à mouler basées sur l'utilisation de résines insaturées, de fibres de verre et d'un mélange de deux charges constituées par l'hydroxide d'aluminium et le quartz, ce dernier étant choisi pour améliorer la résistance aux rayures.

Or, l'utilisation de charges dures en quantités importantes dans des matières sous forme BMC entraîne généralement la détérioration du matériel de production ainsi que des matériels de moulage. Les phénomènes d'usure responsables de cette détérioration conduisent à des renouvellements fréquents des équipements et à une augmentation considérable des coûts de production.

La demanderesse a découvert de nouvelles matières à mouler à effet décoratif, permettant d'obtenir une très grande variété d'objets moulés à aspect décoratif, homogènes en masse, selon des techniques de moulage classiques adaptées aux matières préparées en SMC ou BMC, sans recourir à une étape supplémentaire de revêtement de la surface de la matière à mouler.

Les temps de cycle de moulage sont sensiblement réduits ainsi que les coûts de production.

Les matières à mouler conformes à l'invention peuvent être facilement préparées sous forme de BMC sans entraîner une déterioration des équipements de production. Elles peuvent être ensuite facilement transformées sans détériorer les équipements de moulage.

Les articles à aspect décoratif obtenus par transformation des matières à mouler selon l'invention, présentent en outre une bonne inertie chimique, une forte résistance à l'abrasion et à une bonne résistance à la rayure.

Les matières à mouler conformes à la présente invention permettent d'obtenir une très large gamme de produits présentant un décor d'aspect minéral coloré de teintes unies, mouchetées, marbrées ou granitées couvrant une large gamme de coloris allant du blanc au noir.

La présente invention a donc pour objet une nouvelle matière à mouler à effet décoratif à base de résine thermodurcissable, de charges et de renforts.

Un autre objet conforme à l'invention concerne la fabrication d'objets moulés à aspect décoratif dans de nombreux domaines techniques et en particulier dans le secteur des équipements sanitaires et de cuisine.

D'autres objets apparaitront à la lumière de la description et des exemples qui suivent.

L'invention concerne des matières à mouler telles que définies dans la revendication 1.

Le rapport en poids de la résine thermodurcissable dissoute dans le monomère sur le polymère thermoplastique est de préférence compris entre 95:5 et 85:15.

Le rapport en poids du liant constitué de la résine dissoute dans le monomère et du polymère thermoplastique sur les charges est compris de préférence entre 27:73 et 38:62.

Le rapport en poids dans le mélange de charges du constituant (A) sur le constituant (B) est compris entre 1:79 et 65: 15.

Les matières à mouler conformes à la présente invention ont la formulation suivante :
- 15 à 30% en poids de résine thermodurcissable en solution monomère:
- 0 à 5% en poids de polymère thermoplastique;
- 1 à 25% en poids de fibres de renforcement;
- 50 à 80% en poids de charges;
- 0,25 à 1% en poids de peroxyde(s) organique(s);
- 0,6 à 2,5% en poids d'agent(s) de démoulage;
les pourcentages en poids étant calculés par rapport au poids total de la matière à mouler.

Le constituant (A) du mélange de charges est constitué par de l'hydrate d'alumine.

Le constituant (B) du mélange de charges est constitué d'une charge ayant un revêtement de pigment ou de colorant, choisie parmi une poudre ou un mélange de poudres de silice broyée, les produits à base de silicates sous forme de sables, tels que des sables de rivière ou de carrière, d'écailles de verre, de billes de verre, ou leurs mélanges.

On peut citer en particulier, la poudre de silice du type cristobalite obtenue par calcination à 1600°C et broyage de galets de silex de mer. Ce type de charge convient plus particulièrement à la fabrication d'articles moulés d'aspect minéral de teinte blanc uniforme.

On peut également mentionner la poudre de silice de quartz revêtue d'un pigment ou d'un colorant. Celle-ci est particulièrement adaptée à la fabrication de produits moulés d'aspect minéral de teinte autre que le blanc.

Le monomère ou le mélange de monomères liquide conforme à l'invention est copolymérisable avec la résine thermodurcissable. Il peut dissoudre le polymère thermoplastique anti-retrait lorsqu'il est présent, dans une large gamme de concentrations.

La résine et le polymère thermoplastique peuvent être ou non compatibles lorsqu'ils sont dissous dans le monomère liquide et mélangés. La composition doit être telle qu'après rétification dans les conditions habituelles de chaleur et de pression, il se forme un produit opaque qui, lorsqu'on l'examine au microscope, présente une structure définie en deux phases indiquant une incompatibilité.

Le monomère ou mélange de monomères est par exemple constitué de styrène ou de vinyltoluène ou bien de l'un de ses composés avec de faibles quantités d'ester alkylique inférieur, d'acide acrylique ou d'acide méthacrylique, de chlorostyrène, de diméthacrylate de 1,3-butane diol ou de phtalate de diallyle.

Il est utilisé de préférence dans des quantités de 30 à 70% en poids par rapport à la quantité totale de résine, de polymère thermoplastique et de monomère liquide.

Les résines polyesters non saturées sont de préférence choisies parmi les produits de condensation d'un acide dicarboxylique à non saturation éthylénique en α, β ou d'un anhydride à insaturation éthylénique avec un dialcool ou un mélange de dialcools.

Les acides carboxyliques sont choisis par exemple parmi les acides maléique, fumarique, citraconique, chloro-maléique. De faibles quantités d'acides dicarboxyliques saturés tels que les acides orthophtalique, adipique, isophtalique, téréphtalique, succinique, sébacique, méthylsuccinique peuvent être également utilisées.

Les dialcools utilisés sont généralement les glycols tels que le propylène glycol, le dipropylène glycol, le diéthylène glycol ou le 1,3-butane diol.

Les résines du type vinylester utilisées selon l'invention sont généralement obtenues par réaction d'un monomère acrylique sur une résine époxyde.

Les résines du type acrylique selon l'invention sont constituées d'un prépolymère polyacrylate-uréthane ou poly-méthacrylate-uréthane et d'un monomère acrylique servant de diluant et d'agent de réticulation.

Les polymères thermoplastiques anti-retrait utilisés selon l'invention sont choisis parmi le polyéthylène, le polystyrène, le polycaprolactone, le polychlorure de vinyle (PVC), le polyacétate de vinyle, les copolymères d'éthylène et d'acétate de vinyle (EVA), les copolymères d'acrylonitrile, de butadiène et de styrène (ABS), les homopolymères de méthacrylate d'alkyle ou d'acrylate, les copolymères d'esters alkyliques inférieurs des acides acrylique ou méthacrylique, les copolymères de méthacrylate de méthyle et de monomères choisis parmi : le méthacrylate de lauryle, le méthacrylate d'isobomyle, l'acrylamide, le méthacrylate d'hydroxyéthyle, le styrène, l'acrylate de 2-éthylhexyle, l'acrylonitrile, l'acide méthacrylique, le métacrylamide, la méthylolacrylamide, le méthacrylate de cétylstéaryle.

On utilise plus particulièrement le polyéthylène ou le polyméthacrylate de méthyle (PMMA).

Les matières à mouler de l'invention préparées en SMC comprennent en plus un agent de mûrissement tel que l'oxyde de magnésium à des concentrations de préférence inférieures ou égales à 0,75% en poids par rapport au poids total de la matière à mouler.

Les matières à mouler de l'invention contiennent un ou plusieurs catalyseurs de durcissement de la résine du type peroxyde organique tel que le peroxyde de dicumyle, le peroctoate de tert.-butyle, le perbenzoate de tert.butyle, le peroxyde de ditert.-butyle.

Les matières à mouler contiennent également des agents de démoulage choisis parmi les stéarates des éléments situés dans la quatrième période du tableau périodique allant du calcium au zinc. On utilise plus particulièrement le stéarate de zinc ou le stéarate de calcium. Il sont présents en des concentrations comprises entre 0,6 et 2,5% en poids par rapport au poids total de la composition.

Les matières à mouler conformes à l'invention peuvent contenir également des agents inhibiteurs de manière à assurer le remplissage du moule lors de la mise en oeuvre. Ils sont généralement choisis parmi les diphénols tels que l'hydroquinone, la benzoquinone et la parabenzoquinone.

Les fibres de renforcement sont choisies par exemple parmi les fibres synthétiques telles que celles du type polyester saturé ou acrylique, les fibres végétales et les fibres de verre broyées.

On utilise plus particulièrement des fibres de verre de longueurs comprises entre 3 et 13 mm en majeure partie, de préférence divisées jusqu'aux monofilaments.

Des décors plus homogènes et plus transparents sont obtenus en utilisant l'hydrate d'alumine comme constituant (A), en particulier en l'absence d'une pâte pigmentaire ou d'un pigment, car son indice de réfraction est proche de celui de la résine polymérisée.

Pour l'obtention de décors minéraux hétérogènes présentant des effets de veines qui rappellent ceux des marbres ou des granits, on utilise de préférence des matières à mouler conformes à l'invention, contenant à titre de renforts, des fibres de verre à ensimage soluble dans la résine, de longueur comprise entre 3 et 25 mm et dans une quantité comprise entre 2 et 20% en poids par rapport au poids total de la composition. Selon les effets de veines recherchés dans le décor des pièces moulées, on fait varier la solubilité dans le traitement d'ensimage des fibres entre 20 et 90%.

Il est également possible d'obtenir des décors minéraux hétérogènes à effets de veines en modifiant la courbe granulométrique de la partie rhéologique de base du mélange de charges, représentée par le constituant (A), présent dans les matières à mouler conformes à l'invention.

En réduisant, dans cette partie de base rhéologique, les quantités de particules les plus fines, 0,1 à 7 µm, on augmente sensiblement l'effet cristallin du décor. Cependant si celle-ci est formulée avec des charges exemptes de particules de taille inférieure ou égale à 20 µm, les produits sont difficilement moulables; on constate en particulier un défaut de transport de la fibre de renforcement dans la matrice.

Il est également possible d'obtenir des effets de veine dans le décor, satisfaisants, en utilisant dans cette partie de base rhéologique un mélange de panicules dont la courbe granulométrique est interrompue dans l'intervalle de tailles compris entre 0,1 et 250 µm. La quantité des particules manquantes dans le domaine de tailles comprises entre 0,7 et 50 µm ne doit pas dépasser 5% en poids par rapport à la quantité totale des particules du mélange.

En effet, la demanderesse a constaté qu'en provoquant un trou dans l'intervalle de 0,7 à 50 µm trop important, les effets de veine étaient considérablement réduits et les produits devenaient difficilement moulables.

Les matières à mouler de l'invention peuvent être préparées sous forme de SMC ou BMC.

Les semi-produits SMC sont fabriqués selon la technique classique.

La préparation de la pâte d'imprégnation est réalisée dans des cuves où on introduit successivement dans la résine l'ensemble des composants de la matière à mouler à l'exception des fibres de renforcement et de l'agent de mûrissement. La pâte est acheminée vers la machine de fabrication du SMC. Juste avant la distribution de la pâte sur la table d'imprégnation, l'agent de mûrissement est introduit par un système de mélange en continu. La machine est constituée d'un tapis transporteur sur lequel vient se dérouler un film de polyéthylène ou un film équivalent. Sur ce film qui sert de support et d'emballage, une première couche de pâte est distribuée au moyen d'une racle. On dépose une couche de renfort sur la pâte que l'on recouvre ensuite d'une deuxième couche de pâte. Cette deuxième couche de pâte est ensuite recouverte de film polyéthylène ou de film équivalent. Le tout passe par un train de calandrage: l'ensemble film/SMC est enroulé ou plié en accordéon puis emballé. Le produit en sortie de machine est stocké pour la phase de mûrissement avant son utilisation.

Les semi-produits BMC selon la présente invention peuvent être préparés selon les deux procédés de préparations suivants :

un procédé de préparation consiste à introduire et à mélanger successivement dans un malaxeur de préférence du type bras en z, dans l'ordre suivant:
1°) la résine, le polymère thermoplastique anti-retrait, les peroxydes organiques:
2°) les agents de démoulage, le constituant (A) du mélange de charges:
3°) le constituant( B);
puis lorsque l'ensemble est homogène, à introduire et mélanger les fibres de renforcement dans un temps déterminé de manière à imprégner les fibres et à réduire au maximum les phénomènes d'abrasion: le produit obtenu sortant par une filière.

Une variante de ce procédé consiste à introduire et mélanger successivement dans un malaxeur bi-vis l'ensemble des composants de la matière à mouler définis dans les paragraphes 1°) et 2°) ci-dessus puis, lorsque le mélange obtenu est homogène, à introduire simultanément le constituant (B) du mélange de charges et les fibres de renforcement.

Dans le cas où on utilise un constituant (B) comprenant une quantité importante de charge de haute dureté ayant une fonction décorative, des phénomènes d'abrasion peuvent subsister dans le cadre des procédés de préparation définis ci-dessus.

Un autre procédé de fabrication de matière à mouler consiste à préparer une pâte d'imprégnation à partir de l'ensemble des composants à l'exception de la charge dure à fonction décorative, à procéder selon la technique de la fabrication des SMC en imprégnant une seule face du lit de renfort par la pâte.

Ce procédé est nouveau et permet d'éliminer totalement les phénomènes d'abrasion. Selon ce nouveau procédé, la charge décorative de forte dureté est introduite après la préparation de la pâte d'imprégnation et répartie par un système de distribution approprié avant, pendant ou après le dépôt des fibres de renforcement.

Un autre procédé de préparation de produit BMC selon l'invention consiste à recourir à la technique du "compound imprégné en continu (CIC)". La pâte comprenant l'ensemble des composants à l'exception du renfort est distribuée sur deux rouleaux horizontaux tournant en sens inverse. Le renfort est imprégné en passant entre les deux rouleaux et par un système de racle, le compound est détaché des rouleaux.

Ce procédé permet également de supprimer les phénomènes d'abrasion et d'éviter la détérioration des fibres de renforcement.

Un objet de l'invention consiste en un procédé de fabrication d'un article moulé qui consiste à effectuer un moulage de la matière à mouler sans étape de revêtement de la surface de ladite matière, selon une technique de moulage classique adaptée aux semi-produits SMC ou BMC.

On utilise plus préférentiellement la technique de moulage par compression à chaud à des températures de l'ordre de 140-160°C et à des pressions de l'ordre de 30 à 200 bars.

Les articles moulés obtenus selon les procédés de fabrication de l'invention couvrent de nombreux secteurs industriels à savoir l'industrie automobile, l'industrie de l'électronique et de l'électroménager.

Une application particulièrement intéressante est l'obtention de pièces moulées à décors d'aspect minéral utilisées dans les équipements sanitaires et de cuisine tels que les éviers, les lavabos, les toilettes, les baignoires ou les revêtements décoratifs.

Les exemples qui suivent servent à illustrer l'invention, ou au moins certains de ses aspects, sans toutefois présenter un caractère limitatif.

### EXEMPLE 1

On prépare la matière à mouler de formulation suivante :
- Résine polyester insaturée (type isophtalique) dissoute dans du styrène 13,3 %
- Polyméthacrylate de méthyle en solution à 30% dans le styrène 8,9 %
- Dioxyde de titane 1,1%
- Perbenzoate de tertiobutyle 0,3 %
- Stéarate de zinc 1,6 %
- Hydrate d'alumine 38,1 %
- Silice cristobalite (granulométrie < 80 µm) 26,7 %
- Fibre de verre de longueur 6 mm 10,0%
(les pourcentages sont définis en poids par rapport au poids total de la composition).

On verse dans un malaxeur du type bras en Z, la résine, le polymère et le peroxyde et on procède au mélangeage.

On ajoute ensuite l'hydrate d'alumine, le pigment et l'agent de démoulage. On procède au mélangeage. Lorsque l'ensemble est homogène, on ajoute la silice. On mélange ensuite à l'ensemble homogène la fibre de verre dans un temps déterminé de façon à imprégner la fibre et réduire les phénomènes d'abrasion.

Le premix ou BMC est ensuite moulé dans un moule en acier de grande dureté de préférence chromé, chauffé à 145-150°C sous une pression de 100 bars. Les conditions sont optimisées à l'aide d'une presse capable de moduler ses vitesses de fermeture et éventuellement de pression. Le temps de polymérisation est d'environ 2 à 3 minutes pour une pièce d'épaisseur 5 mm.

On obtient les articles moulés blancs dont la résistance à la rayure selon la norme DIN 53799-4-15 est supérieure ou égale à 1,25 N. Leur résistance à l'eau est excellente. La reprise de poids selon la norme DIN 53-393 est inférieure à 0,4% aussi bien en exposition d'eau bouillante en phase vapeur qu'en phase liquide pendant quatre jours.

### EXEMPLE 2

On prépare la matière à mouler de composition suivante :
- Résine polyester insaturée (type isophtalique) dissoute dans du styrène 13,6 %
- Polyméthacrylate de méthyle en solution à 30% dans le styrène 9,1 %
- Dioxyde de titane (pigment) 0,2 %
- Perbenzoate de tertiobutyle 0,3 %
- Stéarate de zinc 1,6 %
- Hydrate d'alumine 38,5 %
- Silice cristobalite (granulométrie < 250µm) 10,9 %
- Silice de quartz noire 15,7 %
- Fibre de verre (6 mm) 10,0 %
(les pourcentages sont définis en poids par rapport au poids total de la composition).

On procède dans les mêmes conditions que l'exemple 1. On obtient des articles moulés de couleur blanc moucheté noir.

### EXEMPLE 3

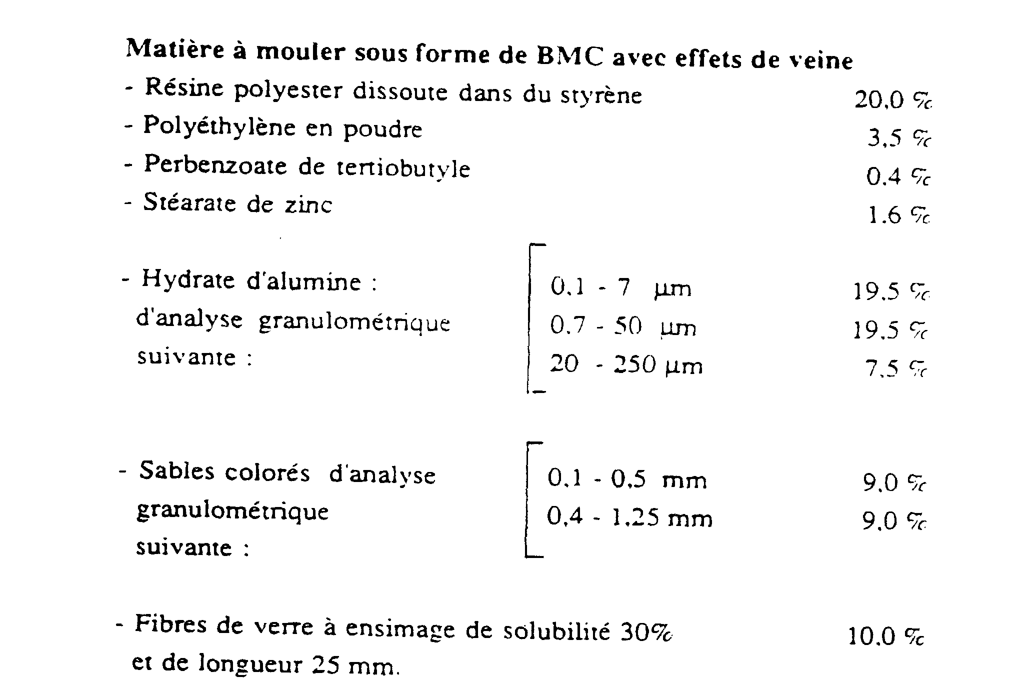

Les pourcentages sont définis en poids par rapport au poids total de la composition.

On obtient après transformation dans les conditions de l'exemple 1 des articles moulés présentant un décor minéral à effet de veines.

### EXEMPLE 4

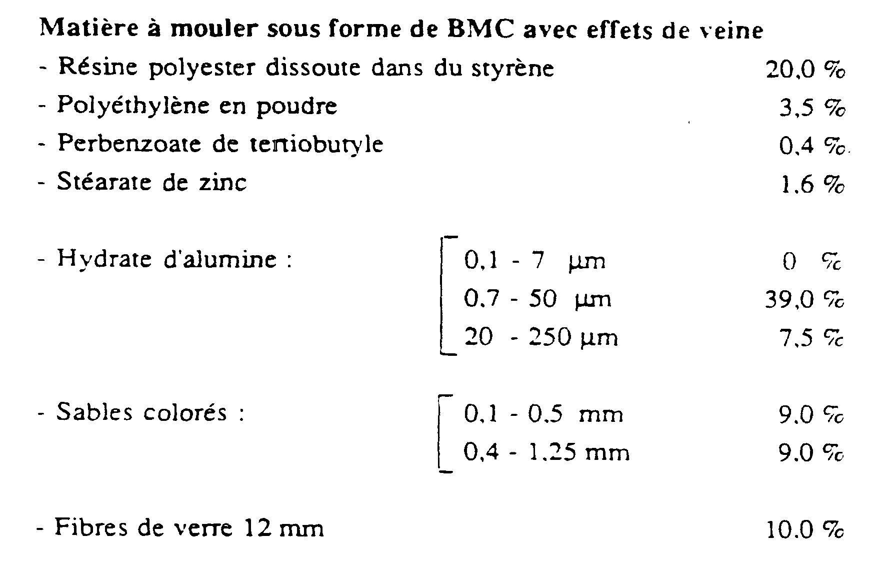

(Les pourcentages sont définis en poids par rapport au poids total de la composition).
Après transformation dans les conditions de l'exemple 1, on obtient des articles moulés décoratifs à effet de veines.

## Revendications

1. Semi-produit à mouler, à effet décoratif, marbré ou granité, de type SMC ou BMC, sous forme de pâte présentée en feuille ou en masse constituée de résine thermodurcissable, de charges et de renforts fibreux, comprenant par rapport au poids total du serai-produit à mouler :
a) 15 à 30 % en poids de résine thermodurcissable du type polyester non saturé, vinylester ou acrylique dissoute dans un monomère ou un mélange de monomères liquide comprenant au moins un groupe vinyle réactif, polymérisable ;
b) 0 à 5 % en poids de polymère thermoplastique anti-retrait, soluble ou non dans le monomère ou le mélange de monomères liquide et donnant pendant la copolymérisation de la résine et du monomère une composition optiquement hétérogène ;
c) 1 à 25 % en poids de fibres de renforcement ;
d) 50 à 80 % en poids d'un mélange de charges minérales;
e) 0,6 à 2,5 % en poids d'agent(s) de démoulage ; et
f) 0,25 à 1% en poids de catalyseur du type péroxyde organique ;
caractérisé en ce que le mélange de charges comprend :
- une partie de base rhéologique (A) constituée de charges de dureté MOHS comprise entre 2 et 5 constituées d'hydrate d'alumine et dont les particules ont une taille inférieure à 250µm et
- un constituant (B) choisi parmi les charges de dureté MOHS comprise entre 6 et 10 et dont la taille des particules est comprise entre 20µm et 5mm et qui comportent un revêtement de colorant ou de pigment, et choisi parmi une poudre ou un mélange de poudres de silice broyée, les produits à base de silicates sous forme de sables, sous forme de billes ou d'écailles de verre ou leurs mélanges,
le rapport en poids de la partie de base rhéologique (A) sur le constituant (B) étant compris entre 1:79 et 65:15.

2. Semi-produit à mouler selon la revendication 1, caractérisé par le fait que le monomère ou le mélange de monomères est constitué de styrène ou de vinyltoluène ou bien de l'un de ces composés avec de faibles quantités d'ester alkylique inférieur, d'acide acrylique ou méthacrylique, de chlorostyrène, de diméthacrylate de 1,3-butane diol ou de phtalate de diallyle.

3. Semi-produit à mouler selon la revendication 2, caractérisé par le fait que le monomère ou le mélange de monomères est présent à une concentration comprise entre 30 et 70 % en poids par rapport au poids total de la résine, du polymère thermoplastique et du ou des monomères.

4. Semi-produit à mouler selon l'une quelconque des revendications 1 à 3, caractérisé par le fait que le polymère thermoplastique est choisi parmi le polyéthylène, le polystyrène, le polycaprolactone, le polychlorure de vinyle, le polyacétate de vinyle, les copolymères d'éthylène et d'acétate de vinyle, les copolymères d'acrylonitrile, de butadiène et de styrène, les homopolymères de méthacrylate d'alkyle ou d'acrylate d'alkyle, les copolymères d'esters alkyliques inférieurs des acides acryliques ou méthacryliques, les copolymères de méthacrylate de méthyle et de monomères choisis parmi : le méthacrylate de lauryle, le méthacrylate d'isobornyle, l'acrylamide, le méthacrylate d'hydroxyéthyle, le styrène, l'acrylate de 2-éthylhexyle, l'acrylonitrile, l'acide méthacrylique, le méthacrylamide, la méthylolacrylamide, le méthacrylate de cétylstéraryle.

5. Semi-produit à mouler selon la revendication 4, caractérisé par le fait que le polymère thermoplastique est choisi parmi le polyéthylène et le polyméthacrylate de méthyle.

6. Semi-produit à mouler selon l'une quelconque des revendications 1 à 5, à effet décoratif marbré ou granité, caractérisé par le fait qu'il contient 2 à 20 % en poids par rapport au poids total de la matière, de fibres de verre à ensimage soluble dans 1a résine, de longueur comprise entre 3 et 25mm.

7. Semi-produit à mouler préparé en SMC selon l'une quelconque des revendications 1 à 6, caractérisé par le fait qu'il contient en plus un agent de mûrissement.

8. Procédé de préparation d'un semi-produit à mouler sous forme de BMC tel que défini selon l'une quelconque des revendications 1 à 6, caractérisé par le fait que l'on introduit et mélange successivement dans un malaxeur du type bras en Z, dans l'ordre suivant :
1) la résine thermodurcissable, le polymère thermoplastique anti-retrait et le catalyseur
2) les agents de démoulage, la partie de base rhéologique (A) du mélange de charges ;
3) le constituant (B) du mélange de charges ; et
que l'on ajoute ensuite les fibres de renforcement au mélange homogène obtenu.

9. Procédé de préparation d'un semi-produit à mouler sous forme de BMC tel que défini selon l'une quelconque des revendications 1 à 6, caractérisé par le fait que l'on introduit et mélange successivement dans un malaxeur de type bi-vis dans l'ordre suivant :
1/ 1a résine, l'agent anti-retrait et les péroxydes organiques,
2/ les agents de démoulage et le constituant (A) du mélange de charges que l'on ajoute ensuite au mélange homogène ainsi obtenu, simultanément le constituant (B) et les fibres de renforcement.

10. Procédé de préparation d'un semi-produit du type BMC tel que défini selon l'une quelconque des revendications 1 à 6, dans lequel le constituant (B) comprend une quantité importante de charge de haute dureté ayant une fonction décorative, caractérisé par le fait que l'on prépare une pâte d'imprégnation avec l'ensemble des composants de la matière à mouler, à l'exception de ladite charge et des fibres de renforcement selon la technique de fabrication des SMC, que l'on imprègne les fibres de renforcement par une seule couche de la pâte ainsi préparée ; la charge dure à fonction décorative étant introduite avant, pendant ou après le dépôt du renfort sur la pâte et répartie selon un système de distribution approprié.

11. Procédé de préparation d'un semi-produit BMC défini selon l'une quelconque des revendications 1 à 6, caractérisé par le fait que l'on procède selon la technique du "compound imprégné en continu" (C.I.C.).

12. Procédé de fabrication d'articles moulés renforcés, caractérisé par le fait que l'on effectue un moulage d'un semi-produit à mouler défini selon l'une quelconque des revendications 1 à 6 sans étape de revêtement de la surface de la matière à mouler, selon une technique de moulage classique adaptée aux semi-produits SMC ou BMC.

13. Procédé de fabrication selon la revendication 12, caractérisé par le fait que l'on effectue un moulage par compression à chaud à une température comprise entre 140 et 160°C et à une pression de l'ordre de 30 à 200 bars.

14. Article moulé susceptibe d'être obtenu par le procédé de fabrication défini dans la revendication 12 ou 13.

15. Semi-produit à mouler selon l'une quelconque des revendications 1 à 7, à effet décoratif marbré ou granité, caractérisé par le fait que la partie de base rhéologique (A) du mélange de charges comprend un mélange de particules dont la courbe granulométrique est interrompue dans l'intervalle de tailles de particules compris entre 0,1 et 250 µm sous réserve que la quantité de particules manquantes de taille comprise entre 0,7 et 50 µm ne dépasse pas 5% en poids par rapport à la quantité totale des particules du mélange.

## Claims

1. Intermediate moulding product, having a marbled or granite-like decorative effect, of the SMC or BMC type, in the form of a dough presented in sheet form or in bulk form and consisting of a thermosetting resin, fillers and fibrous reinforcements, comprising, with respect to the total weight of the intermediate moulding product:
a) 15 to 30% by weight of a thermosetting resin of the unsaturated polyester, vinyl ester or acrylic type, dissolved in a liquid monomer or monomer mixture comprising at least one reactive, polymerizable vinyl group;
b) 0 to 5% by weight of an antishrinkage thermoplastic polymer which is soluble or insoluble in the liquid monomer or monomer mixture and which gives an optionally heterogeneous composition during the copolymerization of the resin and of the monomer;
c) 1 to 25% by weight of reinforcing fibres;
d) 50 to 80% by weight of a mixture of mineral fillers;
e) 0.6 to 2.5% by weight of mould release agent(s); and
f) 0.25 to 1% by weight of a catalyst of the organic peroxide type;
characterized in that the filler mixture comprises:
- a rheological base part (A) consisting of fillers of Mohs hardness of between 2 and 5 and consisting of alumina hydrate, the particles of which have a size of less than 250 µm and
- a constituent (B) chosen from fillers of Mohs hardness of between 6 and 10 and whose particle size is between 20 µm and 5 mm and which include a coating of pigment or dye, and chosen from a powder or a mixture of powders of ground silica, silicate-based products in the form of sand, or in the form of glass balls or glass chips, or mixtures thereof,
the ratio by weight of the rheological base part (A) to the constituent (B) being between 1:79 and 65:15.

2. Intermediate moulding product according to Claim 1, characterized in that the monomer or monomer mixture consists of styrene or vinyltoluene or of one of these compounds with small quantities of lower alkyl ester, of acrylic or methacrylic acid, of chlorostyrene, of 1,3-butanediol dimethacrylate or of diallyl phthalate.

3. Intermediate moulding product according to Claim 2, characterized in that the monomer or the monomer mixture is present in a concentration of between 30 and 70 % by weight relative to the total weight of the resin, of the thermoplastic polymer and of the monomer (s).

4. Intermediate moulding product according to any one of Claims 1 to 3, characterized in that the thermoplastic polymer is chosen from polyethylene, polystyrene, polycaprolactone, polyvinyl chloride, polyvinyl acetate, copolymers of ethylene and vinyl acetate, copolymers of acrylonitrile, butadiene and styrene, alkyl methacrylate or alkyl acrylate homopolymers, copolymers of lower alkyl esters of acrylic or methacrylic acids, and copolymers of methyl methacrylate and of monomers chosen from: lauryl methacrylate, isobornyl methacrylate, acrylamide, hydroxyethyl methacrylate, styrene, 2-ethylhexyl acrylate, acrylonitrile, methacrylic acid, methacrylamide, methylolacrylamide and cetylstearyl methacrylate.

5. Intermediate moulding product according to Claim 4, characterized in that the thermoplastic polymer is chosen from polyethylene and polymethyl methacrylate.

6. Intermediate moulding product according to any one of Claims 1 to 5, having a marbled or granitelike decorative effect, characterized in that it contains from 2 to 20 % by weight, in relation to the total weight of the material, of glass fibres having sizing which is soluble in the resin and between 3 and 25 mm in length.

7. Intermediate moulding product, prepared as SMC, according to any one of Claims 1 to 6, characterized in that it additionally contains a maturing agent.

8. Process for the preparation of an intermediate moulding product in BMC form, as defined according to any one of Claims 1 to 6, characterized in that the following are introduced and mixed in succession in a mixer of the Z-blade type, in the following order:
1) the thermosetting resin, the antishrinkage thermoplastic polymer and the catalyst;
2) the mould-release agents, the rheological base part (A) of the filler mixture;
3) the constituent (B) of the mixture of fillers;
and that the reinforcing fibres are then added to the homogeneous mixture obtained.

9. Process for the preparation of an intermediate moulding product in BMC form, as defined according to any one of Claims 1 to 6, characterized in that the following are introduced and mixed in succession in a mixer of the twin-screw type, in the following order:
1) the resin, the antishrinkage agent and the organic peroxides;
2) the mould-release agents and the constituent (A) of the filler mixture; that the constituent (B) and the reinforcing fibres are then added simultaneously to the homogeneous mixture thus obtained.

10. Process for the preparation of an intermediate product of the BMC type as defined according to any one of Claims 1 to 6, in which the constituent (B) comprises a large quantity of filler of high hardness having a decorative function, characterized in that an impregnating dough is prepared with all the components of the material to be moulded, with the exception of the said filler and the reinforcing fibres, by the technique for the manufacture of SMCs, that the reinforcing fibres are impregnated with a single layer of the dough thus prepared; the hard filler having a decorative function being introduced before, during or after the deposition of the reinforcement on the dough and distributed by a suitable dispensing system.

11. Process for the preparation of a BMC intermediate product defined according to any one of Claims 1 to 6, characterized in that it is carried out using the "continuously impregnated compound" (CIC) technique.

12. Process for the manufacture of reinforced moulded articles, characterized in that an intermediate moulding product defined according to any one of Claims 1 to 6 is moulded, without a stage of coating the surface of the moulding material, using a conventional moulding technique adapted to SMC or BMC intermediate products.

13. Process of manufacture according to Claim 12, characterized in that hot compression moulding is carried out at a temperature of between 140 and 160°C and at a pressure of the order of 30 to 200 bar.

14. Moulded article capable of being obtained by the process of manufacture defined in Claim 12 or 13.

15. Intermediate moulding product according to any one of Claims 1 to 7, having a marbled or granite-like decorative effect, characterized in that the rheological base part (A) of the filler mixture comprises a mixture of particles whose particle size distribution curve is interrupted in the particle size range of between 0.1 and 250 µm provided that the amount of missing particles having a size of between 0.7 and 50 µm does not exceed 5% by weight with respect to the total amount of particles in the mixture.

## Patentansprüche

1. Halbfertigprodukt mit marmor- oder granitartiger Dekorwirkung zur formgebenden Verarbeitung, in Gestalt von SMC oder BMC, in Form einer als Flächengebilde oder als Masse vorliegenden teigigen Formmasse, die aus unter Wärmeeinwirkung härtbarem Harz, Füllstoffen und faserigen Verstärkungen besteht, welche bezogen auf das Gesamtgewicht des formgebbaren Halbfertigproduktes enthält:
a. 15 bis 30 Gewichtsprozent unter Wärmeeinwirkung aushärtendes Harz vom Typ ungesättigter Polyester, Vinylester oder Acrylat, gelöst in einem flüssigen Monomeren oder einer flüssigen Mischung von Monomeren, das bzw. die wenigstens eine reaktionsfähige polymerisierbare Vinylgruppe enthält;
b. 0 bis 5 Gewichtsprozent thermoplastisches, schwindungshemmendes Mittel, das in dem flüssigen Monomeren oder der flüssigen Monomerenmischung löslich oder unlöslich ist und das bei der Copolymerisation des Harzes und des Monomeren eine optisch heterogene Masse ergibt;
c. 1 bis 25 Gewichtsprozent Verstärkungsfasern;
d. 50 bis 80 Gewichtsprozent einer Mischung mineralischer Füllstoffe;
e. 0,6 bis 2,5 Gewichtsprozent eines oder mehrerer Formtrennmittel; und
f. 0,25 bis 1 Gewichtsprozent eines oder mehrerer Katalysatoren in Form organischer Peroxide;
dadurch gekennzeichnet, dass die Füllstoffmischung enthält:
- einen rheologischen Basisanteil (A), der aus Füllstoffen mit einer MOHS-Härte zwischen zwei und fünf besteht, die aus Aluminiumhydrat bestehen und deren Teilchengröße kleiner als 250 µm ist
- einen Bestandteil (B), der aus Füllstoffen mit einer MOHS-Härte zwischen 6 und 10 gewählt ist und deren Teilchengröße zwischen 20 µm und 5 µm liegt und die eine Farbstoff- oder Pigmentbeschichtung tragen und unter einem Pulver oder einer Pulvermischung aus gemahlener Kieselerde, Stoffen auf Silikatbasis in Form von Sanden, in Form von Glaskugeln oder -plättchen oder Gemischen derselben ausgewählt ist,
wobei das Gewichtsverhältnis des rheologischen Basisanteils (A) zu dem Bestandteil (B) zwischen 1:79 und 65:15 liegt.

2. Halbfertigprodukt nach Anspruch 1 dadurch gekennzeichnet, dass das Monomere oder die Monomerenmischung aus Styrol oder Vinyltoluol oder aber einer deren Verbindungen mit geringen Anteilen eines geringwertigen Alkylesters, von Acryl- oder Methacrylsäure, von Chlorstyrol, von Dimethacrylat, von 1,3 - Butandiol oder von Diallylphtalat besteht.

3. Halbfertigprodukt nach Anspruch 2, dadurch gekennzeichnet, dass das Monomere oder die Monomerenmischung in einer Konzentration vorliegt, die zwischen 30 und 70 Gewichtsprozent, bezogen auf das Gesamtgewicht des Harzes, des thermoplastischen Polymeren und des oder der Monomeren liegt.

4. Halbfertigprodukt nach einem der Ansprüche 1 bis 3, dadurch gekennzeichnet, dass das thermoplastische Polymere ausgewählt ist unter Polyethylen, Polystyrol, Polykaprolactan, Polyvinylchlorid, Polyvinylacetat, Copolymeren von Vinylethylen und Vinylacetat, Copolymeren von Acrylnitril, Butadien und Styrol, Homopolymeren von Methylmethacrylat oder Alkylacrylat, Copolymeren von geringwertigen Alkylestern von Acryl- oder Methacrylsäuren, Copolymeren von Methylmethacrylat und Monomeren, die ausgewählt sind unter: Laurylmethacrylat, Isobornylmethacrylat, Acrylamid, Hydroxiethylmethacrylat, Styrol, 2-Ethylhexylacrylat, Acrylnitril, Methacrylsäure, Methacrylamid, Methylacrylamid, Cethylstearylmethacrylat.

5. Halbfertigprodukt nach Anspruch 4, dadurch gekennzeichnet, dass das thermoplastische Polymere unter Polyethylen und Polymethylmethacrylat ausgewählt ist.

6. Halbfertigprodukt nach einem der Ansprüche 1 bis 5 mit einer marmor- oder granitartigen Dekorwirkung, dadurch gekennzeichnet, dass es, bezogen auf das Gesamtmaterialgewicht, 2 bis 20 Gewichtsprozent Glasfasern einer Länge von zwischen 3 und 25 mm mit einer in dem Harz löslichen Schlichte aufweist.

7. Halbfertigprodukt in Gestalt einer SMC nach einem der Ansprüche 1 bis 6, dadurch gekennzeichnet, dass es außerdem ein Reifungsmittel (agent de mûrissement) enthält.

8. Verfahren zur Herstellung eines Halbfertigprodukt in Gestalt einer BMC, nach einem der vorhergehenden Ansprüche 1 bis 6, dadurch gekennzeichnet, dass man in einen Sigma-Mischer in der nachfolgenden Reihenfolge einführt und mischt:
1. Das durch Wärmeeinwirkung aushärtende Harz, das schwindungshemmende thermoplastische Polymere und den Katalysator;
2. die Formtrennmittel, den rheologischen Basisanteil (A);
3. den Bestandteil (B) der Füllstoffmischung und
wobei man sodann die Verstärkungsfasern der erhaltenen homogenen Mischung zugibt

9. Verfahren zur Herstellung eines Halbfertigproduktes in Gestalt einer BMC nach einem der Ansprüche 1 bis 6, dadurch gekennzeichnet, dass man in einen 2-Schneckenkneter in der nachfolgenden Reihenfolge einführt und mischt:
1. Das Harz, das schwindungshemmende Mittel und die organischen Peroxide;
2. die Formtrennmittel und den Bestandteil (A) der Füllstoffmischung; dass man sodann der so erhaltenen homogenen Mischung gleichzeitig den Bestandteil (B) und die Verstärkungsfasern zugibt.

10. Verfahren zur Herstellung eines Halbfertigproduktes in Gestalt einer BMC nach einem der Ansprüche 1 bis 6, wobei der Bestandteil (B) einen wesentlichen Füllstoffanteil hoher Härte enthält, der eine dekorative Funktion hat, dadurch gekennzeichnet, dass man mit allen Bestandteilen der Formmasse, mit Ausnahme der Füllstoffe und der Verstärkungsfasern, gemäß der Herstellungstechnik von SMCs eine teigige Imprägnierungsmasse herstellt, dass man die Verstärkungsfasern mit einer einzigen Schicht der so hergestellten Masse imprägniert; wobei der die dekorative Funktion ausübende harte Füllstoff vor, während oder nach der Auflage der Verstärkung auf die Masse aufgetragen und mittels eines geeigneten Verteilungsverfahrens verteilt wird.

11. Verfahren zur Herstellung eines BMC Halbfertigproduktes nach einem der Ansprüche 1 bis 6, dadurch gekennzeichnet, dass man dabei nach der "kontinuierlichen Compoundimprägnierungstechnik" (CIC) vorgeht.

12. Verfahren zur Herstellung verstärkter Formteile, dadurch gekennzeichnet, dass man eine Verformung eines Halbfertigproduktes nach einem der Patentansprüche 1 bis 6 ohne die Stufe der Beschichtung der Oberfläche der Formmasse, gemäß einem für SMC- oder BMC-Halbfertigprodukte gebräuchlichen, formgebenden Verfahren vornimmt.

13. Herstellungsverfahren nach Anspruch 12, dadurch gekennzeichnet, dass man eine Formgebung durch Heißpressen bei einer Temperatur zwischen 140 und 160°C und unter einem Druck in der Größenordnung von 30 bis 200 bar vornimmt.

14. Geformter Gegenstand erzeugbar nach dem Herstellungsverfahren nach dem Anspruch 12 oder 13.

15. Halbfertigprodukte mit marmor- oder granitartiger Dekorwirkung nach einem der Ansprüche 1 bis 7, dadurch gekennzeichnet, dass der rheologische Basisanteil (A) der Füllstoffmischung ein Teilchengemisch aufweist, dessen Sieblinie in dem Intervall der Teilchengröße zwischen 0,1 und 250 µm unterbrochen ist, mit der Maßgabe, dass die Menge der fehlenden Teilchen der Größe zwischen 0,7 und 50 µm, 5 Gewichtsprozent, bezogen auf die Gesamtmenge der Teilchen des Gemisches, nicht übersteigt.
